# EUROPÄISCHE PATENTSCHRIFT

(11) **EP 3 191 741 B1**
(45) Veröffentlichungstag und Bekanntmachung des Hinweises auf die Patenterteilung: **30.09.2020**
(21) Anmeldenummer: 15754176.4
(22) Anmeldetag: 20.08.2015
(51) Int. Cl.: F16H 59/10, F16H 61/22

(54) **SCHALTVORRICHTUNG ZUR ELEKTROMECHANISCHEN BETÄTIGUNG EINES AUTOMATIKGETRIEBES FÜR EIN FAHRZEUG**
SHIFTING DEVICE FOR ELECTROMECHANICALLY ACTUATING AN AUTOMATIC TRANSMISSION FOR A VEHICLE
DISPOSITIF DE CHANGEMENT DE VITESSE POUR L'ACTIONNEMENT ÉLECTROMÉCANIQUE D'UNE BOÎTE DE VITESSES AUTOMATIQUE D'UN VÉHICULE

(30) Priorität: 09.09.2014 DE 102014217957
(43) Veröffentlichungstag der Anmeldung: 19.07.2017
(73) Patentinhaber: Bayerische Motoren Werke Aktiengesellschaft, 80809 München (DE)
(72) Erfinder: HAIRER, Gabriel, 80807 München (DE); LINDNER, Matthias, 82166 Gräfelfing (DE); STROLZ, Michael, 80809 München (DE)
(86) Internationale Anmeldenummer: PCT/EP2015/069115
(87) Internationale Veröffentlichungsnummer: WO 2016/037822

(56) Entgegenhaltungen:
- EP-A1- 0 625 656
- DE-A1-102005 043 288
- US-A- 5 494 141
- US-A- 5 938 562
- US-A1- 2003 074 999
- US-A1- 2003 085 098

## Beschreibung

Die Erfindung betrifft eine Schaltvorrichtung zur elektromechanischen Betätigung eines Automatikgetriebes für ein Fahrzeug, insbesondere für ein Kraft- oder Nutzfahrzeug.

Solche herkömmlichen Schaltvorrichtungen, welche häufig im Zusammenhang mit sogenannten "shift-by-wire"-Automatikgetrieben eigesetzt werden, weisen üblicherweise einen in unterschiedliche Schaltstellungen bewegbaren Schalthebel auf, mittels dessen Bewegung in eine jeweilige Schaltstellung das Automatikgetriebe in Abhängigkeit von der jeweiligen Schaltstellung betätigt werden kann. Dabei wird der eigentliche Schaltvorgang elektromechanisch, insbesondere elektrohydraulisch oder elektromotorisch, vorgenommen, während der jeweilige Schaltwunsch des Fahrers elektrisch oder elektronisch anhand der Bewegung des Schalthebels erfasst wird. Dem Fahrer stehen üblicherweise bei solchen Automatikgetrieben die elektrische Schaltvorrichtung mit dem bewegbaren Schalthebel und gegebenenfalls zusätzlichen, etwa am Lenkrad angeordneten, Wippschaltern zum Herauf- und Herunterschalten zur Verfügung.

Beispielswiese können solche Schalthebel, weitläufig auch als Wählhebel, Ganghebel, Gangwahlhebel oder Gangwahlschalter, etc. bezeichnet, innerhalb von zwei nebeneinander angeordneten Schaltgassen bewegt werden. Eine der Schaltgassen kann dabei eine sogenannte Automatikgasse sein, in welcher der Schalthebel in mehrere Schaltstellungen wie beispielsweise P (engl. "park" - Parkstellung mit mechanischer Verriegelung des Getriebes gegen Wegrollen), R (engl. "reverse" (Rückwärtsgang)), N (engl. "neutral" (Leerlauf)), D (engl. "drive" (Vorwärtsfahrt mit automatischer Gangwahl), etc. gebracht bzw. bewegt werden kann. Die andere der Schaltgassen ist zur manuellen Gangwahl bei dem Automatikgetriebe vorgesehen, beispielsweise zum Einlegen eines nächsthöheren oder nächstniedrigeren Gangs des Automatikgetriebes.

Der Wechsel zwischen den Schaltgassen soll dabei nur von der Schaltstellung "D" in der einen Schaltgasse und der entsprechenden Schaltstellung in der anderen Schaltgasse aus vollzogen werden können. Zu diesem Zweck weisen die herkömmlichen Schaltvorrichtungen weiterhin mittels Aktuator betätigbare Begrenzungseinrichtungen auf, wobei derartige Begrenzungseinrichtungen eingerichtet sind, in Abhängigkeit von der Betätigung durch den Aktuator eine Bewegung des Schalthebels von einer Ausgangsschaltstellung wie die "D"-Schaltstellung in der einen Schaltgasse in eine entsprechende Zielschaltstellung in der anderen Schaltgasse zu blockieren oder freizugeben. Weitläufig wird die Einheit aus Aktuator und Begrenzungseinrichtung auch als Aktuator-Einheit bezeichnet.

Da der Schalthebel in herkömmlichen Schaltvorrichtungen in gewissen Schaltstellungen häufig monostabil sein soll, d.h. nur eine einzige stabile Position einnehmen können soll, so dass bei Verschwenken bzw. Bewegen des Schalthebels eine automatische Rückstellung des Schalthebels erfolgt, ist eine Aktuator-Einheit notwendig, welche neben der bloßen Bewegungsbegrenzung des Schalthebels, beispielsweise mittels eines sog. variablen Endanschlags, auch ein aktives Rückstellsystem des Schalthebels aufweist. Beispielswiese wird der Schalthebel dann monostabil gelagert, wenn eine automatische Rückstellung von der manuellen Gasse in die Automatikgasse zur Schaltstellung "D" hin erfolgen soll, d.h. zum Zwecke eines Schaltgassenwechsels, oder wenn eine automatische Rückstellung von einer Schaltstellung zu einer anderen Schaltstellung hin innerhalb der gleichen Schaltgasse, beispielsweise eine Rückstellung von der "N"-Schaltstellung zur "P"-Schaltstellung hin, erfolgen soll. Der Schalthebel einer solchen Schaltvorrichtung kann hingegen dann multistabil betätigbar ausgeführt sein, d.h. der Schalthebel kann in mehrere feste bzw. stabile Positionen einstellbar sein, wenn sich der Schalthebel in einer Schaltstellung befindet, in der beispielsweise ein Schaltgassenwechsel zwischen der Automatikschaltgasse und der manuellen Schaltgasse ermöglicht werden soll, während der Schalthebel - wie vorstehend erwähnt - monostabil betätigbar ausgeführt sein kann, wenn eine automatische Rückstellung von der entsprechenden Schaltstellung der manuellen Schaltgasse zur Schaltstellung "D" hin erwünscht wird.

Schaltvorrichtungen mit solchen Aktuator-Einheiten sind beispielswiese aus der DE 10 2005 023 926 A1 bekannt, welche einen variablen Endanschlag aufweist und eine automatische Rückstellung des Schalthebels mittels eines drehbaren Exzenters, der durch einen Elektromotor angetrieben wird, durchführt.

Weiterhin sind Schaltvorrichtungen mit solchen Aktuator-Einheiten bekannt, die einen variable Endanschlag mittels kippbarer Elemente realisieren und eine automatische Rückstellung über ein Doppel-Federstößelsystem, welches durch einen monostabilen, elektrischen Hubmagneten bewegt wird, vornehmen.

Allerdings kommt es bei der Umsetzung der Schaltvorrichtung mit dem monostabilen, elektrischen Hubmagneten zu einer erhöhten Geräuschentwicklung; insbesondere ensteht ein häufig als störend oder als minderwertig empfundenes Aktuatorgeräusch beim Einlegen der Fahrstufe "D", da der Endanschlag zur Freigabe in die manuelle Schaltgasse wegbewegt wird. Dieser Vorgang erfolgt aufgrund einer Positionsänderung eines Ankers im Hubmagneten, so dass die Bewegung mit einer Geräuschentwicklung verbunden ist. Da die Positionsveränderung des Ankers und damit die Geräuschentwicklung meist zeitverzögert zum aktiven Schaltvorgang in die Fahrstufe "D" stattfindet, kann das Aktuatorgeräusch nicht unmittelbar einer Schaltbewegung zugeordnet werden und führt häufig zu Irritationen eines Fahrers des Fahrzeugs. Zudem entsteht durch Betreiben des monostabilen, elektrischen Hubmagneten eine dauerhafte Aufnahme einer elektrischen Verlustleistung. Beispielsweise befindet sich, um den Zugang in die manuelle Schaltgasse zu ermöglichen, der Anker im Hubmagnet immer in einer monostabilen Position, welche eine dauerhafte elektrische Leistungsaufnahme von ca. 4W zur Folge hat. Damit einhergehend entsteht ein erhöhter Energiebedarf bzw. Kraftstoffverbrauch des Fahrzeugs, da diese Verlustleistung meist während der gesamten Fahrzeit aufgebracht wird.

Weiterer Stand der Technik wird durch die US 2003/0085098 A1, US 5 494 141 A und DE 10 2005 043288 A1 gebildet.

Diese Dokumente offenbaren keine Schaltvorrichtungen, die eine Begrenzungseinrichtung aufweisen, welche einen Schaltgassenwechsel, nämlich von der Automatikschaltgasse in die benachbarte Schaltgasse zur manuellen Gangwahl blockieren oder freigeben.

Der Erfindung liegt daher die Aufgabe zugrunde, die gattungsgemäßen Schaltvorrichtungen derart weiterzubilden, dass die Nachteile des Standes der Technik zumindest teilweise überwunden werden können. Insbesondere soll eine Schaltvorrichtung zur Verfügung gestellt werden, bei der die Geräuschentwicklung im Vergleich zum Stand der Technik verringert wird.

Diese Aufgabe wird durch die Merkmale des unabhängigen Anspruchs gelöst. Vorteilhafte Ausgestaltungen und Weiterbildungen der Erfindung ergeben sich aus den abhängigen Ansprüchen.

Somit wird bei der erfindungsgemäßen Schaltvorrichtung eine Aktuator-Einheit aus Aktuator und Begrenzungseinrichtung zur Verfügung gestellt, welche im Vergleich zu der aus dem Stand der Technik bekannten Schaltvorrichtung mit dem monostabilen, elektrischen Hubmagneten eine geringere Geräuschentwicklung im Betrieb aufweist. Vorzugsweise erfolgt der Antrieb für das den variablen Endanschlag ausbildende Anschlagelement mittels des Aktuators in Form eines rotatorischen Elektromotors, vorzugsweise eines Schrittmotors mit Rast- bzw. Haltemoment, wobei auch die automatische Rückstellung mittels des rotatorischen Elektromotors umgesetzt wird. Um eine rotatorische Bewegung des Elektromotors, insbesondere eines Antriebszahnrads des Elektromotors, in eine translatorische Bewegung des Betätigungselements umzuwandeln, kann das Betätigungselements mit einer Zahnstange ausgebildet werden, welche mit der Antriebswelle über das Antriebszahnrad (oder alternativ eine Zahnschnecke) des Elektromotors in Verbindung steht. Um ein passendstes Verhältnis zwischen Drehzahl/Drehmoment des Motors zur Hubbewegung der Zahnstange zu erreichen, kann unter anderem auch ein Getriebe mit beispielsweise mehreren Zahnräder oder Zahnschnecken verwendet werden.

Für den Fall, dass kein Elektromotor mit Haltemoment zum Einsatz kommt, kann die Haltekraft zur Halterung des Betätigungselements in Position durch eine nach dem Federstößelprinzip arbeitende Einrichtung erzeugt werden. Beispielsweise kann ein horizontaler Federstößel mit einem angeschrägten Ende in eine keilartige Vertiefung in das Betätigungselement eingreifen, um so eine Haltekraft des Betätigungselements zu erzeugen, wenn der Elektromotor nicht betrieben wird. Alternativ kann aber auch ein elektromechanischer Aktuator als translatorischer Elektromotor, beispielsweise in Form eines lineargeführten Schrittmotors, zum Einsatz kommen.

Durch Verwendung des rotatorischen Elektromotors anstelle des vorstehend beschriebenen monostabilen, elektrischen Hubmagneten als Aktuator kann das Geräusch eines "satten Endanschlags" erheblich verringert werden. Da der rotatorische Elektromotor mit Haltemoment nur dann bestromt werden muss, wenn der Endanschlag des Schalthebels geändert bzw. die automatische Rückstellung des Schalthebels durchgeführt werden soll, ist eben keine dauerhafte Leistungsaufnahme wie bei dem der Stand der Technik angehörenden Schalteinrichtung notwendig. Somit kann der Energiebedarf bzw. Kraftstoffverbrauch des Fahrzeugs weiter verringert werden, was zu einer Erhöhung der Reichweite des Fahrzeugs bei elektrobetriebenen Kraftfahrzeugen führen kann.

Die erfindungsgemäße Schaltvorrichtung kann in vorteilhafter Weise derart weitergebildet werden, dass das Betätigungselement bei Betätigung des Anschlagelements bistabil gehaltert ist, so dass das Betätigungselement und der Schalthebel zwischen der einen ersten stabilen Zustand bildenden Ausgangsschaltstellung und der einen zweiten stabilen Zustand bildenden Zielschaltstellung bewegbar sind.

Weiterhin kann die erfindungsgemäße Schaltvorrichtung so ausgestaltet werden, dass die bistabile Halterung des Betätigungselements durch eine erste betätigungselementseitige Rasteinrichtung, insbesondere einen Federstößel, und eine mit der ersten betätigungselementseitigen Rasteinrichtung zusammenwirkende erste Führungseinrichtung, insbesondere eine Rastkulisse, ausgebildet wird, so dass der Schalthebel in der Ausgangsschaltstellung und in der Zielschaltstellung verrastet werden kann.

Darüber hinaus kann die erfindungsgemäße Schaltvorrichtung derart verwirklicht werden, dass das Betätigungselement bei unterlassener Betätigung des Anschlagelements monostabil gehaltert ist, so dass das Betätigungselement und der Schalthebel von der Zielschaltstellung in die einen einzigen stabilen Zustand bildende Ausgangsschaltstellung bewegt werden.

Ferner kann die erfindungsgemäße Schaltvorrichtung so umgesetzt werden, dass die monostabile Halterung des Betätigungselements durch eine zweite betätigungselementseitige Rasteinrichtung, insbesondere einen Federstößel, und eine mit der betätigungselementseitigen Rasteinrichtung zusammenwirkende zweite Führungseinrichtung, insbesondere eine Rastkulisse, ausgebildet wird, so dass der Schalthebel in der Ausgangsschaltstellung verrastet werden kann und/oder von der Zielschaltstellung in die Ausgangsschaltstellung zum Einrasten in der Ausgangsschaltstellung selbsttätig zurückbewegt werden kann.

Des Weiteren kann die erfindungsgemäße Schaltvorrichtung derart ausgebildet werden, dass das rotatorisch bewegbare Anschlagelement gegen das Betätigungselement vorgespannt ist.

Weiterhin kann die erfindungsgemäße Schaltvorrichtung so ausgeführt sein, dass das rotatorisch bewegbare Anschlagelement eingerichtet ist, die Bewegung des Schalthebels von der Ausgangsschaltstellung in die Zielschaltstellung zu blockieren und weiterhin eine Bewegung des in der Zielschaltstellung befindlichen Schalthebels über die Zielschaltstellung hinaus zu blockieren.

Ferner kann die erfindungsgemäße Schaltvorrichtung so weitergebildet werden, dass der Aktuator zumindest teilweise durch einen Elektromotor mit Haltemoment zur Arretierung des Halteelements in einer jeweiligen Position ausgebildet wird.

Alternativ kann die erfindungsgemäße Schaltvorrichtung derart verwirklicht werden, dass der Aktuator zumindest teilweise durch einen Elektromotor ausgebildet wird und eine von dem Elektromotor separate Arretiereinrichtung zur Arretierung des Halteelements in einer jeweiligen Position vorgesehen ist.

Das erfindungsgemäße Fahrzeug ist insbesondere ein Kraft- oder Nutzfahrzeug und umfasst die erfindungsgemäße Schaltvorrichtung.

Bevorzugte Ausführungsformen der Erfindung werden nachfolgend anhand der Figuren beispielhaft erläutert.

Es zeigen:
- Fig. 1 bis 4: schematische Darstellungen einer erfindungsgemäßen Schaltvorrichtung gemäß einem ersten Ausführungsbeispiel in unterschiedlichen Zuständen; und
- Fig. 5 und 6: schematische Darstellungen einer erfindungsgemäßen Schaltvorrichtung gemäß einem zweiten Ausführungsbeispiel in unterschiedlichen Zuständen.

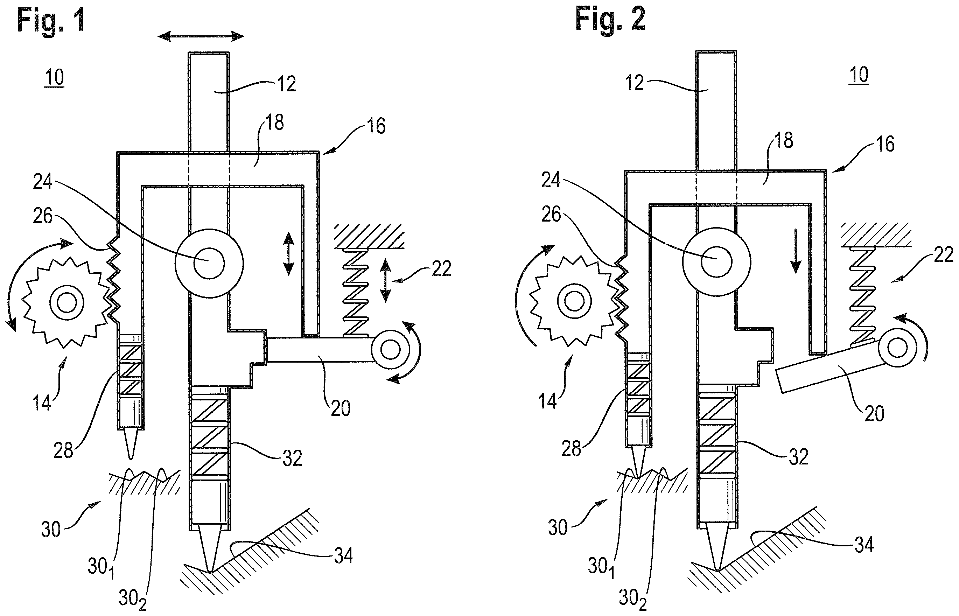

Die Fig. 1 bis 4 zeigen schematische Darstellungen einer erfindungsgemäßen Schaltvorrichtung 10 gemäß einem ersten Ausführungsbeispiel in unterschiedlichen Zuständen.

Die erfindungsgemäße Schaltvorrichtung 10 ist in diesem Ausführungsbeispiel zur elektromechanischen Betätigung eines Automatikgetriebes für ein Kraftfahrzeug vorgesehen und umfasst zu diesem Zweck, wie aus den Fig. 1 bis 4 ersichtlich ist, einen in unterschiedliche Schaltstellungen bewegbaren Schalthebel 12, mittels dessen Bewegung in eine jeweilige Schaltstellung das in diesem Fall nicht dargestellte Automatikgetriebe in Abhängigkeit von der jeweiligen Schaltstellung betätigt werden kann.

In diesem Fall ist das Schalten in die jeweiligen Schaltstellungen des Schalthebels 12 in unterschiedlichen nebeneinander liegenden Schaltgassen möglich.

In einer ersten Schaltgasse, einer sogenannten Automatikschaltgasse, können eine Parkschaltstellung (P), bei der eine mechanische Verriegelung des Automatikgetriebes gegen Wegrollen bewirkt wird, ein Rückwärtsgang (R), eine Leerlaufschaltstellung (N), bei der das Getriebe von dem Motor des Kraftfahrzeugs entkoppelt wird, und eine Fahrtschaltstellung (D) zur Vorwärtsfahrt mit automatischer Gangwahl ausgewählt werden.

In einer zweiten Schaltgasse, einer sogenannten manuellen Schaltgasse zur manuellen Gangwahl, können Gänge des Automatikgetriebes manuell herauf- und herunterschaltet werden. Die erste und zweite Schaltgasse können bei diesem Ausführungsbeispiel ausgewählt werden, indem der Schalthebel 12 von der Fahrtschaltstellung (D) in der ersten Schaltgasse in eine daneben liegende Gangwahlfahrtstellung zur manuellen Gangwahl in der zweiten Schaltgasse bewegt wird.

Um sicherzustellen, dass der Schalthebel 12 nur von der Fahrtschaltstellung (D) in der ersten Schaltgasse aus in die Gangwahlfahrtstellung in der zweiten Schaltgasse bewegt werden kann, weist die Schaltvorrichtung 10 weiterhin einen Aktuator 14 und eine mittels des Aktuators 14 betätigbare Begrenzungseinrichtung 16 auf.

Die Begrenzungseinrichtung 16 ist dabei dazu eingerichtet, in Abhängigkeit von der Betätigung durch den Aktuator 14 eine Bewegung des Schalthebels 12 von der Fahrtschaltstellung (D) (nachstehend als Ausgangsschaltstellung bezeichnet) in die Gangwahlfahrtstellung (nachstehend als Zielschaltstellung bezeichnet) zu blockieren oder freizugeben. Zu diesem Zweck umfasst die Begrenzungseinrichtung 16 ein translatorisch entlang des Schalthebels 12 bewegbares Betätigungselement 18 und ein rotatorisch mittels Betätigung durch das Betätigungselement 18 bewegbares Anschlagelement 20.

Das Betätigungselement 18 und das Anschlagelement 20 sind dabei derart eingerichtet, dass das Anschlagelement 20 mittels Betätigung durch das Betätigungselement 18 derart rotatorisch bewegt wird, dass das Anschlagelement 20 die Bewegung des Schalthebels 12 von der Ausgangsschaltstellung in die Zielschaltstellung freigibt. Um dies zu bewerkstelligen ist das Betätigungselement 18 in Form einer Gabel bzw. gabelförmig ausgebildet, wobei der Schalthebel 12 um eine Drehachse 24 verdrehbar gelagert ist und das Betätigungselement 18 relativ zu dem Schalthebel 12 entlang des Schalthebels 12 translatorisch bewegbar an dem Schalthebel 12 geführt ist und somit ebenso um die Drehachse 24 verdrehbar gelagert ist.

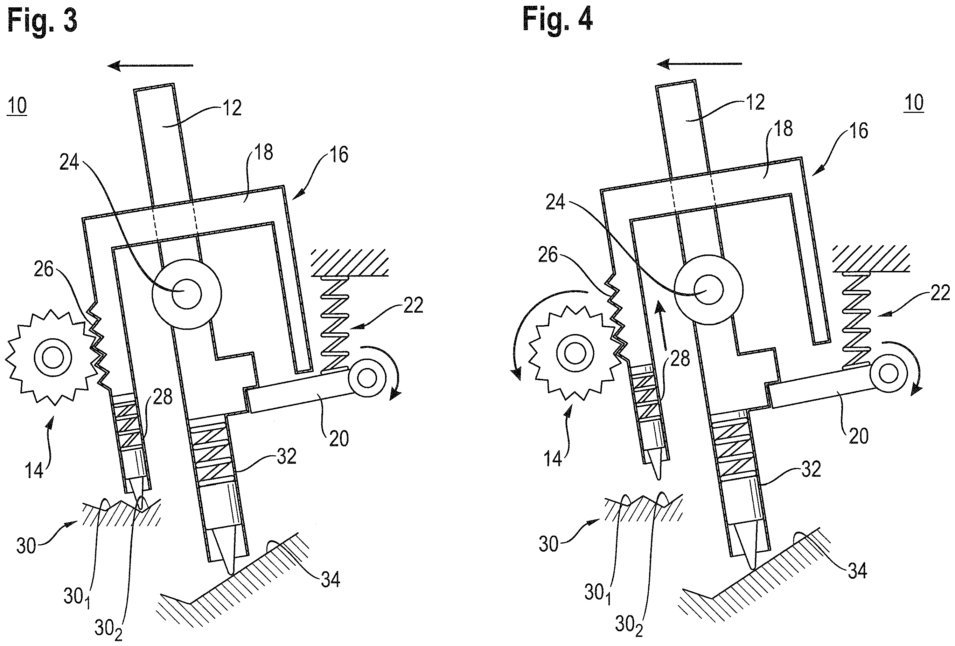

Das rotatorisch bewegbare Anschlagelement 20 ist mittels einer Feder 22 gegen das Betätigungselement 18, insbesondere gegen einen Schenkel des gabelförmigen Betätigungselements 18, vorgespannt. Wie insbesondere in Fig. 1 erkennbar ist, wirkt das Anschlagelement 20 mit dem Betätigungselement 18 somit derart zusammen, dass das rotatorisch bewegbare Anschlagelement 20 die Bewegung des Schalthebels 18 von der Ausgangsschaltstellung in die Zielschaltstellung blockiert, d.h. einen Endanschlag ausbildet, sofern das Anschlagelement 20 von dem Betätigungselement 18 nicht betätigt wird, d.h. in Fig. 1 nicht nach unten bewegt und gehalten wird. Weiterhin wirkt das Anschlagelement 20 mit dem Betätigungselement 18 derart zusammen, dass - wie in den Fig. 3 und 4 zu erkennen ist - eine Bewegung des in der Zielschaltstellung befindlichen Schalthebels 12 über die Zielschaltstellung hinaus blockiert wird, sofern das Anschlagelement 20 von dem Betätigungselement 18 zunächst betätigt wird, d.h. in eine entsprechende Stellung verdreht wird, und der Schalthebel 12 in die Zielschaltstellung bewegt wird.

Um das Betätigungselement 18 in die entsprechende Stellung zur Betätigung des Anschlagelements 20 translatorisch - in Fig. 1 nach unten - zu bewegen oder zum Ablassen bzw. Einstellen der Betätigung des Anschlagelements 20 translatorisch - in Fig. 1 nach oben - zu bewegen, ist der vorstehend erwähnte Aktuator 14 seitlich von dem Betätigungselement 18 vorgesehen und greift über ein Zahnrad in eine an dem anderen Schenkel des gabelförmigen Betätigungselements 18 vorgesehene Verzahnung bzw. Zahnstange 26 ein. In diesem Ausführungsbeispiel ist der Aktuator 14 ein Elektromotor mit Haltemoment zur Arretierung des Halteelements 18 in einer jeweiligen Position mittels des Zahnrads.

Wie insbesondere in den Fig. 2 und 3 erkennbar ist, ist das Betätigungselement 18 und damit der Schalthebel 12 bei Betätigung des Anschlagelements 20 bistabil gehaltert, so dass das Betätigungselement 18 und der Schalthebel 12 zwischen der einen ersten stabilen Zustand bildenden Ausgangsschaltstellung und der einen zweiten stabilen Zustand bildenden Zielschaltstellung bewegbar sind. Dabei wird die bistabile Halterung des Betätigungselements 18 bzw. des Schalthebels 12 durch eine erste betätigungselementseitige Rasteinrichtung in Form eines Federstößels 28 und eine mit dem Federstößel 28 zusammenwirkende erste Führungseinrichtung in Form einer Rastkulisse 30 ausgebildet. Dabei ermöglicht die Rastkulisse 30 im dargestellten Fall die zwei stabilen Zustände durch Ausbildung zweier benachbarter Rastvertiefungen 30₁ und 30₂, in die der Federstößel 28 jeweils gefahren werden kann. Dementsprechend kann das Betätigungselement 18 und damit der Schalthebel 12 in der Ausgangsschaltstellung und in der Zielschaltstellung verrastet werden, wobei aufgrund einer auf das Betätigungselement 18 und die Rastkulisse 30 wirkenden Federkraft des Federstößels 28 das Betätigungselement 18 und damit der Schalthebel 12 je nach Stellung eine der beiden stabilen Zustände einnimmt.

Wie aus den Fig. 1 und 4 ersichtlich ist, ist das Betätigungselement 18 bzw. der Schalthebel 12 bei unterlassener Betätigung des Anschlagelements 20 hingegen monostabil gehaltert, so dass das Betätigungselement 18 und der Schalthebel 12 von der Zielschaltstellung in die einen einzigen stabilen Zustand bildende Ausgangsschaltstellung bewegt werden. Dies wird dadurch erzielt, dass die monostabile Halterung des Betätigungselements 18 durch eine zweite betätigungselementseitige Rasteinrichtung in Form eines zweiten Federstößels 32 und eine mit der betätigungselementseitigen zweiten Rasteinrichtung zusammenwirkende zweite Führungseinrichtung in Form einer zweiten Rastkulisse 34 ausgebildet wird. Dementsprechend kann das Betätigungselement 18 in der Ausgangsschaltstellung verrastet werden und von der Zielschaltstellung in die Ausgangsschaltstellung zum Einrasten in der Ausgangsschaltstellung selbsttätig zurückbewegt werden. Dabei sind in der Stellung des Betätigungselements 18, bei der keine Betätigung des Anschlagelements 20 durch das Betätigungselement 18 erfolgt, die erste und zweite Rasteinrichtung 28 und 32 relativ zu deren zugehörigen ersten und zweiten Führungseinrichtungen 30 und 34 so angeordnet, dass nur die zweite Rasteinrichtung 32 mit deren Führungseinrichtung 34 zusammenwirkt, d.h. die erste Rasteinrichtung 28 und die erste Führungseinrichtung 30 wirkungslos sind.

Der Betrieb der erfindungsgemäßen Schaltvorrichtung 10 gestaltet sich wie folgt:
In dem in Fig. 1 dargestellten Zustand der Schaltvorrichtung 10 blockiert das Anschlagelement 20 die Bewegung des Schalthebels 12 von der Ausgangsschaltstellung in die Zielschaltstellung.

Durch Verfahren des Betätigungselements 18 mittels des Aktuators 14 - in Fig. 1 nach unten - wird das Anschlagelement 20 verkippt bzw. verdreht, so dass der Schalthebel 12 sowie das Betätigungselement 18 von der Ausgangsschaltstellung in die Zielschaltstellung bewegt werden können, wie in Fig. 2 gezeigt ist. Gleichzeitig wird der Federstößel 28 auf Rastvertiefung 30₁ der Rastkulisse 30 gedrückt. Da der Aktuator 14 als Elektromotor mit Haltemoment ausgebildet ist, bleibt die Relativposition des Betätigungselements 18 in Bezug auf den Schalthebel 18 unverändert.

Wie in Fig. 3 gezeigt ist, kann der Schalthebel 12 und somit das Betätigungselement 18 in die Zielschaltstellung bewegt werden, bei der der Federstößel 28 in die Rastvertiefung 30₂ einrastet. Dabei wirkt das Anschlagelement 20 erneut als Anschlag, so dass der Schalthebel 12 und das Betätigungselement 18 nicht über die Zielschaltstellung hinaus bewegt werden können. Selbstverständlich kann der Schalthebel 12 und das Betätigungselement 18 erneut in die Ausgangsschaltstellung zurückbewegt werden. In den Fig. 2 und 3 sind der Schalthebel 12 und das Betätigungselement 18 somit bistabil gehaltert bzw. gelagert.

Wird das Betätigungselement 18 durch den Aktuator 14 translatorisch in eine Stellung bewegt, bei der keine Betätigung des Anschlagelements 20 erfolgt, d.h. wird das Betätigungselement 18 translatorisch in dessen Ausgangsposition - in Fig. 4 nach oben - bewegt, so entfernt sich der Federstößel 28 von der Rastkulisse 30, so dass ausschließlich der zweite Federstößel 32 und die Rastkulisse 34 zusammenwirken, wodurch der Schalthebel 12 und das Betätigungselement 18 zurück in die Ausgangsschaltstellung aufgrund der Federkraft des Federstößels 32 bewegt werden. Der Schalthebel 12 befindet sich somit aufgrund der Zusammenwirkung von zweitem Federstößel 32 und Rastkulisse 34 zunächst in einer instabilen Position und wird durch die Federkraft automatisch in die Ausgangsschaltstellung zurückbewegt, bis der stabile Zustand bei dieser monostabilen Lagerung erreicht ist. Aufgrund der Feder 22 des Anschlagelements 20 wird letzteres erneut in eine Stellung verdreht, in der das Anschlagelement 20 eine Bewegung des Schalthebels 12 und des Betätigungselements 18 in die Zielschaltstellung blockiert.

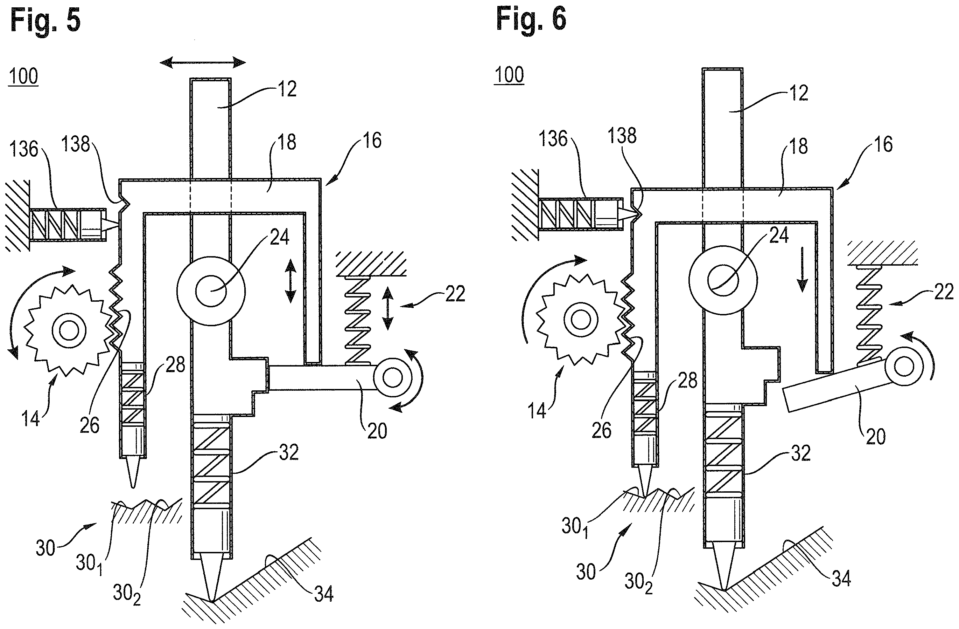

Fig. 5 und 6 zeigen schematische Darstellungen einer erfindungsgemäßen Schaltvorrichtung 100 gemäß einem zweiten Ausführungsbeispiel in unterschiedlichen Zuständen. Bei der Beschreibung des zweiten Ausführungsbeispiels wird lediglich auf die Unterschiede zum ersten Ausführungsbeispiel eingegangen, wobei gleiche in den Fig. 5 und 6 dargestellte Komponenten im Hinblick auf das erste Ausführungsbeispiel mit gleichen Bezugszeichen bezeichnet sind.

Wie in den Fig. 5 und 6 gezeigt ist, wird der Aktuator 14 durch einen Elektromotor ausgebildet, welcher in diesem Ausführungsbeispiel kein Haltemoment zur Verfügung stellen kann. Daher ist eine von dem Elektromotor separate Arretiereinrichtung 136, 138 zur Arretierung des Halteelements 18 in einer jeweiligen Position vorgesehen. Die Arretiereinrichtung 136, 138 weist einen Federstößel 136 sowie eine halteelementseitige Rastvertiefung 138 auf, so dass die Arretiereinrichtung 136, 138 das Betätigungselement 18 in einer Stellung halten bzw. arretieren kann, bei der das Betätigungselement 18 das Anschlagelement 20 betätigt, so dass der Schalthebel 12 und das Betätigungselement 18 von der Ausgangsschaltstellung in die Zielschaltstellung bewegt werden können. Durch entsprechende Betätigung durch den Aktuator 14, d.h. durch Bewegung des Betätigungselements 18 in Fig. 6 nach oben, kann die Arretierung aufgehoben werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Schaltvorrichtung (10, 100) zur elektromechanischen Betätigung eines Automatikgetriebes für ein Fahrzeug, wobei die Schaltvorrichtung (10, 100) einen in unterschiedliche Schaltstellungen bewegbaren Schalthebel (12) aufweist, der von einer Ausgangsstellung, einer Fahrtschaltstellung (D) einer eine Automatikschaltgasse ausbildenden ersten Schaltgasse, in eine Zielschaltstellung, eine daneben liegende Gangwahlfahrstellung zur manuellen Gangwahl in einer neben der ersten Schaltgasse liegenden unterschiedlichen zweiten Schaltgasse, bewegbar ist, wobei die Schaltvorrichtung (10, 100) weiterhin eine mittels eines Aktuators (14) betätigbare Begrenzungseinrichtung (16) aufweist, die eingerichtet ist, in Abhängigkeit von der Betätigung durch den Aktuator (14) eine Bewegung des Schalthebels (12) von der in der ersten Schaltgasse auswählbaren Ausgangsschaltstellung in die in der zweiten Schaltgasse auswählbaren Zielschaltstellung zu blockieren oder freizugeben, wobei der Schalthebel (12) um eine Drehachse (24) verdrehbar gelagert ist und die Begrenzungseinrichtung (16) ein relativ zu dem Schalthebel (12) entlang des Schalthebels (12) translatorisch bewegbar an den Schalthebel (12) geführtes Betätigungselement (18) und ein rotatorisch mittels Betätigung durch das Betätigungselement (18) bewegbares Anschlagelement (20) aufweist, wobei das Betätigungselement (18) und das Anschlagelement (20) derart eingerichtet sind, dass das Anschlagelement (20) mittels Betätigung durch das Betätigungselement (18) derart rotatorisch bewegt wird, dass das Anschlagelement (20) die Bewegung des Schalthebels (12) von der Ausgangsschaltstellung in die Zielschaltstellung freigibt.

2. Schaltvorrichtung (10, 100) gemäß Anspruch 1, wobei das Betätigungselement (18) bei Betätigung des Anschlagelements (20) bistabil gehaltert ist, so dass das Betätigungselement (18) und der Schalthebel (12) zwischen der einen ersten stabilen Zustand bildenden Ausgangsschaltstellung und der einen zweiten stabilen Zustand bildenden Zielschaltstellung bewegbar sind.

3. Schaltvorrichtung (10, 100) gemäß Anspruch 2, wobei die bistabile Halterung des Betätigungselements (18) durch eine erste betätigungselementseitige Rasteinrichtung, insbesondere einen Federstößel (28), und eine mit der ersten betätigungselementseitigen Rasteinrichtung zusammenwirkende erste Führungseinrichtung, insbesondere eine Rastkulisse (30), ausgebildet wird, so dass der Schalthebel (12) in der Ausgangsschaltstellung und in der Zielschaltstellung verrastet werden kann.

4. Schaltvorrichtung (10, 100) gemäß einem der Ansprüche 1 bis 3, wobei das Betätigungselement (18) bei unterlassener Betätigung des Anschlagelements (20) monostabil gehaltert ist, so dass das Betätigungselement (18) und der Schalthebel (12) von der Zielschaltstellung in die einen einzigen stabilen Zustand bildende Ausgangsschaltstellung bewegt werden.

5. Schaltvorrichtung (10, 100) gemäß Anspruch 4, wobei die monostabile Halterung des Betätigungselements (18) durch eine zweite betätigungselementseitige Rasteinrichtung, insbesondere einen Federstößel (32), und eine mit der betätigungselementseitigen Rasteinrichtung zusammenwirkende zweite Führungseinrichtung, insbesondere eine Rastkulisse (34), ausgebildet wird, so dass das Schalthebel (12) in der Ausgangsschaltstellung verrastet werden kann und/oder von der Zielschaltstellung in die Ausgangsschaltstellung zum Einrasten in der Ausgangsschaltstellung selbsttätig zurückbewegt werden kann.

6. Schaltvorrichtung (10, 100) gemäß einem der vorangehenden Ansprüche, wobei das rotatorisch bewegbare Anschlagelement (20) gegen das Betätigungselement (18) vorgespannt ist.

7. Schaltvorrichtung (10, 100) gemäß einem der vorangehenden Ansprüche, wobei das rotatorisch bewegbare Anschlagelement (20) eingerichtet ist, die Bewegung des Schalthebels (12) von der Ausgangsschaltstellung in die Zielschaltstellung zu blockieren und weiterhin eine Bewegung des in der Zielschaltstellung befindlichen Schalthebels (12) über die Zielschaltstellung hinaus zu blockieren.

8. Schaltvorrichtung (10) gemäß einem der vorangehenden Ansprüche, wobei der Aktuator (14) zumindest teilweise durch einen Elektromotor mit Haltemoment zur Arretierung des Halteelements (18) in einer jeweiligen Position ausgebildet wird.

9. Schaltvorrichtung (100) gemäß einem der vorangehenden Ansprüche 1 bis 8, wobei der Aktuator (14) zumindest teilweise durch einen Elektromotor ausgebildet wird und eine von dem Elektromotor separate Arretiereinrichtung (136, 138) zur Arretierung des Halteelements (18) in einer jeweiligen Position vorgesehen ist.

10. Fahrzeug, insbesondere Kraft- oder Nutzfahrzeug, mit einer Schaltvorrichtung (10, 100) gemäß einem der Ansprüche 1 bis 9.

## Claims

1. Shift apparatus (10, 100) for electromechanically operating an automatic transmission for a vehicle, wherein the shift apparatus (10, 100) has a shift lever (12) which can be moved to different shift positions and which can be moved from a starting position, a drive shift position (D) of a first shift gate which forms an automatic shift gate, to a target shift position, an adjacent gear selector drive position for manual gear selection in a different second shift gate which is situated next to the first shift gate, wherein the shift apparatus (10, 100) further has a limiting device (16) which can be operated by means of an actuator (14) and is designed to block or to release a movement of the shift lever (12) from the starting shift position, which can be selected in the first shift gate, to the target shift position, which can be selected in the second shift gate, depending on the operation by the actuator (14), wherein the shift lever (12) is mounted such that it can rotate about a rotation axis (24) and the limiting device (16) has an operating element (18), which is guided on the shift lever (12) such that it can be moved in a translatory manner along the shift lever (12) relative to the shift lever (12), and a stop element (20), which can be moved in a rotational manner by means of operation by the operating element (18), wherein the operating element (18) and the stop element (20) are designed in such a way that the stop element (20) is moved in a rotational manner by means of operation by the operating element (18) in such a way that the stop element (20) releases the movement of the shift lever (12) from the starting shift position to the target shift position.

2. Shift apparatus (10, 100) according to Claim 1, wherein the operating element (18) is held in a bistable manner when the stop element (20) is operated, so that the operating element (18) and the shift lever (12) can be moved between the starting shift position, which forms a first stable state, and the target shift position, which forms a second stable state.

3. Shift apparatus (10, 100) according to Claim 2, wherein the bistable holding of the operating element (18) is formed by a first operating element-side latching device, in particular a spring tappet (28), and a first guide device which interacts with the first operating element-side latching device, in particular a latching link (30), so that the shift lever (12) can be latched in the starting shift position and in the target shift position.

4. Shift apparatus (10, 100) according to one of Claims 1 to 3, wherein the operating element (18) is held in a monostable manner when operation of the stop element (20) ceases, so that the operating element (18) and the shift lever (12) are moved from the target shift position to the starting shift position which forms a single stable state.

5. Shift apparatus (10, 100) according to Claim 4, wherein the monostable holding of the operating element (18) is formed by a second operating element-side latching device, in particular a spring tappet (32), and a second guide device which interacts with the operating element-side latching device, in particular a latching link (34), so that the shift lever (12) can be latched in the starting shift position and/or can be automatically moved back from the target shift position to the starting shift position for latching in the starting shift position.

6. Shift apparatus (10, 100) according to one of the preceding claims, wherein the stop element (20) which can be moved in a rotational manner is prestressed against the operating element (18).

7. Shift apparatus (10, 100) according to one of the preceding claims, wherein the stop element (20) which can be moved in a rotational manner is designed to block the movement of the shift lever (12) from the starting shift position to the target shift position and further to block a movement of the shift lever (12), which is located in the target shift position, beyond the target shift position.

8. Shift apparatus (10) according to one of the preceding claims, wherein the actuator (14) is at least partially formed by an electric motor with a holding torque for locking the holding element (18) in a respective position.

9. Shift apparatus (100) according to one of the preceding Claims 1 to 8, wherein the actuator (14) is at least partially formed by an electric motor and a locking device (136, 138), which is separate from the electric motor, is provided for locking the holding element (18) in a respective position.

10. Vehicle, in particular motor vehicle or utility vehicle, comprising a shift apparatus (10, 100) according to one of Claims 1 to 9.

## Revendications

1. Dispositif de changement de vitesses (10, 100) pour l'actionnement électromécanique d'une boîte de vitesses automatiques pour un véhicule, le dispositif de changement de vitesses (10, 100) présentant un levier de sélection (12) déplaçable dans différentes positions de changement de vitesses, qui peut être déplacé d'une position initiale, une position de sélection de marche (D) d'une première voie de changement de vitesse constituant la voie de changement de vitesse automatique, à une position de changement de vitesse cible, une position de marche avec sélection de vitesse située à côté, pour la sélection manuelle de vitesse, dans une deuxième voie de changement de vitesse différente située à côté de la première voie de changement de vitesse, le dispositif de changement de vitesses (10, 100) présentant en outre un dispositif de limitation (16) pouvant être actionné au moyen d'un actionneur (14), qui, en fonction de l'actionnement par l'actionneur (14), est prévu pour bloquer ou libérer un déplacement du levier de sélection (12) de la position de changement de vitesse initiale pouvant être sélectionnée dans la première voie de changement de vitesse à la position de changement de vitesse cible pouvant être sélectionnée dans la deuxième voie de changement de vitesse, le levier de sélection (12) étant supporté de manière rotative autour d'un axe de rotation (24) et le dispositif de limitation (16) présentant un élément d'actionnement (18) guidé sur le levier de sélection (12) de manière à pouvoir être déplacé en translation par rapport au levier de sélection (12) le long du levier de sélection (12) et un élément de butée (20) pouvant être déplacé en rotation au moyen de l'actionnement par l'élément d'actionnement (18), l'élément d'actionnement (18) et l'élément de butée (20) étant prévus de telle sorte que l'élément de butée (20) soit déplacé en rotation au moyen de l'actionnement par l'élément d'actionnement (18) de telle sorte que l'élément de butée (20) libère le déplacement du levier de sélection (12) de la position de changement de vitesse initiale à la position de changement de vitesse cible.

2. Dispositif de changement de vitesses (10, 100) selon la revendication 1, dans lequel l'élément d'actionnement (18), lors de l'actionnement de l'élément de butée (20), est supporté de manière bistable de telle sorte que l'élément d'actionnement (18) et le levier de sélection (12) puissent être déplacés entre la position de changement de vitesse initiale formant un premier état stable et la position de changement de vitesse cible formant un deuxième état stable.

3. Dispositif de changement de vitesses (10, 100) selon la revendication 2, dans lequel le support bistable de l'élément d'actionnement (18) est réalisé par un premier dispositif d'encliquetage du côté de l'élément d'actionnement, en particulier un poussoir à ressort (28), et un premier dispositif de guidage coopérant avec le premier dispositif d'encliquetage du côté de l'élément d'actionnement, en particulier une coulisse d'encliquetage (30), de telle sorte que le levier de sélection (12) puisse être encliqueté dans la position de changement de vitesse initiale et dans la position de changement de vitesse cible.

4. Dispositif de changement de vitesses (10, 100) selon l'une quelconque des revendications 1 à 3, dans lequel l'élément d'actionnement (18), en l'absence d'un actionnement de l'élément de butée (20), est retenu de manière monostable de telle sorte que l'élément d'actionnement (18) et le levier de sélection (12) soient déplacés de la position de changement de vitesse cible à la position de changement de vitesse initiale formant un unique état stable.

5. Dispositif de changement de vitesses (10, 100) selon la revendication 4, dans lequel le support monostable de l'élément d'actionnement (18) est réalisé par un deuxième dispositif d'encliquetage du côté de l'élément d'actionnement, en particulier un poussoir à ressort (32), et un deuxième dispositif de guidage coopérant avec le dispositif d'encliquetage du côté de l'élément d'actionnement, en particulier une coulisse d'encliquetage (34), de telle sorte que le levier de sélection (12) puisse être encliqueté dans la position de changement de vitesse initiale et/ou puisse être ramené automatiquement de la position de changement de vitesse cible dans la position de changement de vitesse initiale en vue de son encliquetage dans la position de changement de vitesse initiale.

6. Dispositif de changement de vitesses (10, 100) selon l'une quelconque des revendications précédentes, dans lequel l'élément de butée (20) déplaçable en rotation est précontraint contre l'élément d'actionnement (18).

7. Dispositif de changement de vitesses (10, 100) selon l'une quelconque des revendications précédentes, dans lequel l'élément de butée déplaçable en rotation (20) est prévu pour bloquer le déplacement du levier de sélection (12) de la position de changement de vitesse initiale à la position de changement de vitesse cible et pour bloquer en outre un déplacement du levier de sélection (12) se trouvant dans la position de changement de vitesse cible au-delà de la position de changement de vitesse cible.

8. Dispositif de changement de vitesses (10) selon l'une quelconque des revendications précédentes, dans lequel l'actionneur (14) est réalisé au moins en partie par un moteur électrique avec un couple de retenue pour bloquer l'élément de retenue (18) dans une position respective.

9. Dispositif de changement de vitesses (100) selon l'une quelconque des revendications précédentes 1 à 8, dans lequel l'actionneur (14) est réalisé au moins en partie par un moteur électrique et un dispositif de blocage (136, 138) séparé du moteur électrique est prévu pour bloquer l'élément de retenue (18) dans une position respective.

10. Véhicule, en particulier véhicule automobile ou véhicule utilitaire, comprenant un dispositif de changement de vitesses (10, 100) selon l'une quelconque des revendications 1 à 9.
